# EUROPÄISCHE PATENTSCHRIFT

(11) **EP 2 874 236 B1**
(45) Veröffentlichungstag und Bekanntmachung des Hinweises auf die Patenterteilung: **06.04.2022**
(21) Anmeldenummer: 13306578.9
(22) Anmeldetag: 19.11.2013
(51) Int. Cl.: H01R 9/05, H01R 13/59, H02G 3/06, H01R 13/6591, H01R 4/64

(54) **Kontaktiervorrichtung zum Kontaktieren eines Kabelschirms**
Contacting device for contacting a cable screen
Dispositif de contact pour la mise en contact d'un blindage de câble

(43) Veröffentlichungstag der Anmeldung: 20.05.2015
(73) Patentinhaber: Nexans, 92400 Courbevoie (FR)
(72) Erfinder: Aue, Volker, 44137 Dortmund (DE)
(74) Vertreter: Ipsilon

(56) Entgegenhaltungen:
- EP-A2- 2 360 803
- DE-C- 898 018
- DE-C2- 2 445 898
- FR-A1- 2 875 342
- GB-A- 565 393
- GB-A- 851 508
- GB-A- 931 509

## Beschreibung

Die Erfindung betrifft eine Kontaktiervorrichtung zum Kontaktieren eines Kabelschirms eines Kabels, insbesondere eines Hochspannungskabels.

Hochspannungskabel weisen im Allgemeinen eine innere Kabelader und durch eine Polsterschicht hiervon getrennt einen äußeren Kabelschirm auf, der im Allgemeinen geerdet wird. Die Kabelschirme werden im Allgemeinen durch eine rohrförmig um die Kabelader geschlossene Aluminiumfolie oder durch eine Vielzahl von Drähten aus Kupfer und in zunehmendem Maße aus Aluminium gebildet. Die Erfindung betrifft Kabel, deren Kabelschirme insbesondere eine rohrförmig um die Kabelader geschlossene Aluminiumfolie oder durch eine Vielzahl von Drähten aus Aluminium gebildet werden. Der Anschluss eines derartigen Hochspannungskabels an z. B. dem Gehäuse einer elektrischen Garnitur oder ein anderes Hochspannungskabel erfordert somit die Kontaktierung sowohl der Kabelader als auch des äußeren Kabelschirms.

Der Anschluss des Kabelschirms erfolgt im Allgemeinen mittels Elektroschweißen. Hierbei sind ein erhebliches Know-How des Personals und ein erheblicher gerätetechnischer Aufwand erforderlich, um eine verlässliche stromtragfähige Verbindung ohne unzulässige Beanspruchung des Kabelschirms und der Isolierung sicherzustellen.Die DE 31 31 274 C2 zeigt eine Erdverbindung für Schichten, Mäntel oder dergleichen eines elektrischen Kabels, dessen Endpartie in Form einzelner Mantel-oder Schirmstreifen nach außen zurückgebogen und zwischen zwei vom Kabelende her auf den Mantel oder Schirm aufgeschobene und diese radial umgreifende Kontaktringe eingeklemmt ist. Hierbei sind ein innerer Federring und ein äußerer formbeständiger Kontaktring vorgesehen, die zueinander konisch ausgebildet sind und die in Metallstreifen geschnittene Metallschicht einklemmen, wobei sie eine die Aluminiumoxidschicht durchdringende Gestaltung, z. B. Riffelung oder Rauigkeit, aufweisen können.

Aus der FR 2875342 A1 geht ein vieladriges Kabel hervor, das als Verbindungskabel zur Übertragung von Informationen zwischen zwei Waggons eines Zuges eingesetzt werden soll Die isolierten elektrischen Adern des Kabels sind von einem gemeinsamen, aus Isoliermaterial bestehenden Mantel umgeben. Der Mantel ist am Ende des Kabels zur Freilegung der Adern entfernt. Sein verbleibendes Ende ist konisch aufgeweitet und in einer Haltevorrichtung eingeklemmt, die zum Gehäuse eines Verbinders gehört, in dem die Adern des Kabels für eine elektrische Steckverbindung zugänglich sind.

Die GB 565393 A betrifft eine Haltevorrichtung für ein elektrisches Kabel, das einen Schirm aus Blei aufweist, der eine Kabelseele umgibt. Das von den Bleischirm umgebenden Schichten befreite Kabel ist durch ein Gehäuse bis in eine Kammer hindurchgeführt. Das Kabelende ist durch eine Packung abgedichtet, die durch eine Druckplatte und eine Trägerplatte zwischen den Bleischirm und das Gehäuse gedrückt wird. Außer dem elektrisch wirksamen, glatt durchgehenden Schirm weist das Kabel in seinem Aufbau auch Bewehrungsdrähte auf, die in Montageposition zwischen dem Gehäuse und einem Klemmkörper eingeklemmt sind.

Die eingangs erwähnte DE2445898C2 zeigt eine Verbindung eines Erdungsschirms eines Energiekabels, bei dem der aus Aluminium bzw. aus einer Aluminiumlegierung hergestellte Schirm zur Bildung von Längsstreifen mehrfach axial eingeschnitten und abgebogen wird. Die so gebildeten Anschlussfahnen werden nach hinten umgebogen und zwischen zwei Scheiben mit schräg zur Verschraubungsachse angeordneten Kontaktflächen eingeklemmt. Derartige Kontaktiervorrichtungen sind relativ aufwändig und die mechanische

Beanspruchung des Schirms ist erheblich.

GB851508A offenbart eine Kontaktiervorrichtung gemäß dem Oberbegriff des Anspruchs 1. GB851508A offenbart eine Kontaktiervorrichtung zum Kontaktieren eines Kabelschirms eines Kabels, die ein erstes Kontaktelement (A) mit einer konischen Außenfläche, ein zweites Kontaktelement (F) mit einer konischen Innenfläche und ein drittes Kontaktelement (G) zum Zwischensetzen zwischen das erste Kontaktelement (A) und das zweite Kontaktelement (F) aufweist, wobei das dritte Kontaktelement (G) eine zweite konische Außenfläche und eine zweite konische Innenfläche aufweist und erste Endbereiche des Kabelschirms (C) zwischen der zweiten konischen Außenfläche (F) des dritten Kontaktelementes (G) und der konischen Innenfläche des zweiten Kontaktelementes (F) verklemmbar sind und zweite Endbereiche des Kabelschirms (C) zwischen der zweiten konischen Innenfläche des dritten Kotaktelementes (G) und der konischen Außenfläche des ersten Kontaktelementes (G) verklemmbar sind.

Der Erfindung liegt die Aufgabe zugrunde, eine Kontaktiervorrichtung zum Kontaktieren eines Kabelschirms, eine Kabelschirmverbindung eines Hochspannungskabels mit einer derartigen Kontaktiervorrichtung zu schaffen, die eine sichere und relativ geringen Aufwand erfordernde Kontaktierung ermöglichen.

Diese Aufgabe wird entsprechend den kennzeichnenden Merkmalen des Patentanspruchs 1 gelöst.

Die Unteransprüche beschreiben bevorzugte Weiterbildungen des Gegenstands des Anspruchs 1.

Erfindungsgemäss ist eine Kontaktiervorrichtung mit drei Kontaktelementen vorgesehen, von denen ein erstes Kontaktelement eine konische Außenfläche und ein zweites Kontaktelement eine konische Innenfläche aufweisen.

Die Innenfläche und die Außenfläche weiten sich hierbei - anders als bei den oben genannten Kontaktiervorrichtungen des Standes der Technik - von der Aufnahmeöffnung der Kontaktiervorrichtung aus zum anderen Ende hin konisch auf, d.h. die konische Innenfläche und die konische Außenfläche weiten sich zum Kabelende des aufgenommen Kabels hin auf.

Die Richtung, in der die Kontaktiervorrichtung auf das Kabel aufgesetzt wird, wird nachfolgend als Montagerichtung bezeichnet.

Der Erfindung liegt der Gedanke zugrunde, die Endbereiche des Kabelschirms zwischen zwei Flächen aufzunehmen, die sich zum Kabelende hin konisch aufweiten. Somit ist es nicht mehr erforderlich, die Endbereiche des Kabelschirms um mehr als 90° nach hinten bzw. in Montagerichtung umzubiegen; es ist vielmehr ausreichend, sie lediglich gering umzubiegen bzw. lediglich etwas aufzuweiten.

Trotz der geringen Umbiegung kann ein sicherer Einklemmvorgang zwischen den gegenläufigen Flächen erreicht werden, indem vorteilhafterweise Spannmittel direkt an den Kontaktelementen angebracht werden. Hierbei erweisen sich insbesondere Schrauben, die durch zumindest eines der Kontaktelemente gesetzt werden, als effektive und leicht bedienbare Spannmittel; so können die Schrauben z. B. durch das als Spannring ausgebildete eine konische Innenfläche aufweisende zweite Kontaktelement durchgesteckt und z. B. in Gewindebohrungen des ersten Kontaktelementes aufgenommen werden. Somit sind lediglich mehrere über den Umfang verteilte Schrauben anzuziehen, um eine gleichmäßige und sichere Verspannung zu erreichen. Die Schrauben gewährleisten hierbei mit geringem Aufwand eine sichere elektrische Verbindung der Endbereiche zu den beiden Kontaktelementen und auch der beiden Kontaktelemente zueinander.

Die Kontaktiervorrichtung ist relativ kleinbauend bzw. platzsparend, da das vorzugsweise als äußerer Spannring ausgebildete zweite Kontaktelement weitgehend auf das erste Kontaktelement aufgeschoben werden kann. Der Steigungswinkel der konischen Innenfläche und Außenfläche, d. h. der Öffnungswinkel des Konus gegenüber der Axialrichtung, kann z.B. in einem Bereich unter 45°, insbesondere unter 30° liegen. Es zeigt sich, dass ein Verspannen oder Verpressen der Endbereiche des Kabelschirms, d. h. Metallstreifen oder Einzeldrähte, unter einem derartigen flachen Winkel sich als vorteilhaft erweist, da sich hierdurch eine relativ große Gleitbewegung des äußeren zweiten Kontaktelementes und somit ein deutlicher Abrieb der gegebenenfalls störenden Aluminiumoxid-Schicht ergibt und weiterhin ein sicherer Kontakt über eine große Fläche erreicht wird.

Die Innenfläche und Außenfläche können ergänzend vorteilhafterweise Strukturierungen zur Erhöhung der Kontaktflächen und zur Zerstörung einer Aluminiumoxidschicht aufweisen.

Unter einer konischen Innenfläche und konischen Außenfläche wird hierbei jeweils eine Fläche verstanden, die sich in Axialrichtung verjüngt bzw. aufweitet, wobei auch Abweichungen gegenüber einem kreisförmigen Querschnitt möglich sind, insbesondere bei Kabeladern, deren Querschnitt nicht genau kreisförmig ist. Die konischen Flächen erstrecken sich vorzugsweise vollständig in Umfangsrichtung um die Achse. Grundsätzlich sind hierbei Ausbildungen der konischen Flächen möglich, die sich in Axialrichtung nicht linear verjüngen oder aufweiten; ein linearer Verlauf ist jedoch vorteilhaft, da hierdurch ein großflächiger Kontakt und eine Gleitbewegung beim Verspannen zum Durchdringen der Aluminiumoxidschicht ermöglicht werden.

Die Kontaktiervorrichtung gemäß der Erfindung aufweist ein drittes Kontaktelement mit sowohl konischer Innenfläche als auch konischer Außenfläche auf, das ergänzend zu dem als Spannring dienenden zweiten Kontaktelement und dem ersten Kontaktelement der Ausführungsformen mit lediglich zwei Kontaktelementen vorgesehen ist. Das dritte Kontaktelement ermöglicht mit dem ersten Kontaktelement und dem zweiten Kontaktelement jeweils separate Verspannungen zum einen des Metallschirms und zum anderen des Drahtschirms.

Auch bei der Ausbildung einer Kabelverbindung mit drei Kontaktelementen kann somit eine hohe Sicherheit gewährleistet werden, da die Verklemmung sowohl des Metallband-Schirms als auch des Draht-Schirms zwischen gegenläufigen konischen Flächen jeweils separate Verspannungen ermöglicht. Hierzu können z. B. jeweils separate Schrauben für jede der Kontaktierungen vorgesehen sein.

Somit kann ein Satz von mehreren Kontaktelementen gebildet werden, mit ähnlicher oder auch gleicher Funktionalität; herbei sind auch Ausbildungen möglich, bei denen wahlweise zwei oder drei Kontaktelemente zur Ausbildung einer geeigneten Kabelschirmverbindung gewählt werden können.

Die Erfindung wird im Folgenden anhand der beiliegenden Zeichnungen an einigen Ausführungsformen erläutert. Es zeigen:
- Fig. 1: eine Kabelschirmverbindung mit einer Kontaktiervorrichtung gemäß einer ersten Ausführungsform zum Anschluss eines Kabelschirms aus einem Metallband, die nicht nicht erfindungsgemäß ist und lediglich der Veranschaulichung dient.
- Fig. 2: eine Kabelschirmverbindung gemäß einer zweiten Ausführungsform zum Anschluss eines Drahtschirms, die nicht erfindungsgemäß ist und lediglich der Veranschaulichung dient; und
- Fig. 3: eine Kabelschirmverbindung gemäß einer dritten Ausführungsform zum Anschluss eines Kabelschirms aus einem Drahtschirm und einem Metallband, die nicht nicht erfindungsgemäß ist.

Ein Hochspannungskabel 1 weist eine innere Kabelader 2 und über eine isolierende Polsterschicht 3 getrennt ein als Kabelschirm dienendes Metallband 4, hier ein Aluminium-Band 4, sowie eine äußere Isolation 5 auf. Das Hochspannungskabel 1 ist als Ganzes vorzugsweise flexibel, so dass auch seine Komponenten, d. h. die Kabelader 2, die Polsterschicht 3, das Aluminium-Band 4 und die äußere Isolation 5 flexibel sind.

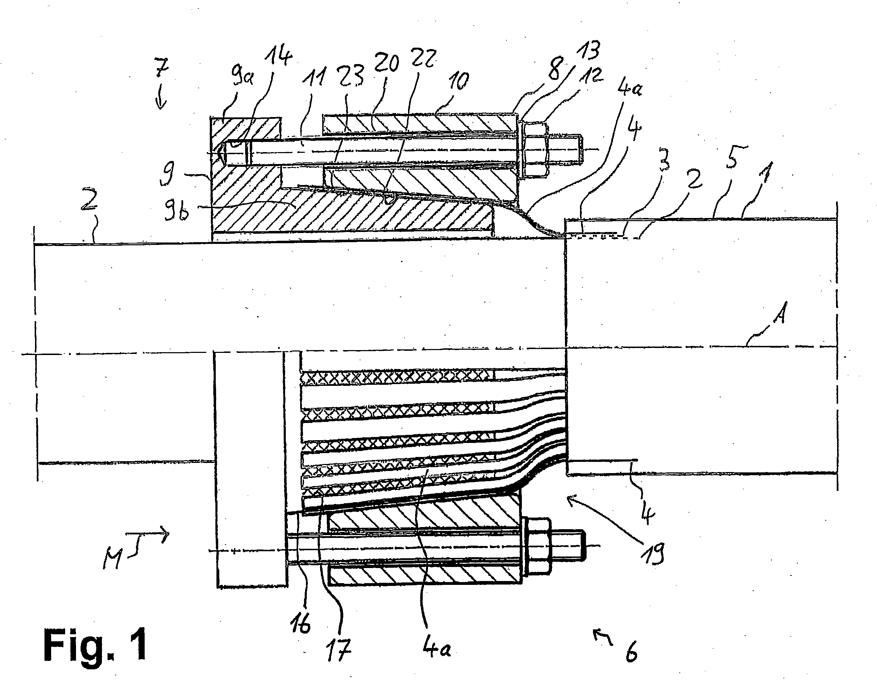

Das Hochspannungskabel 1 ist in einer Kabelschirmverbindung 6 an eine elektrische Einrichtung 7 angeschlossen, die z. B. ein weiteres Hochspannungskabel oder eine elektrische Garnitur sein kann. Die Kabelschirmverbindung 6 dient zur Kontaktierung des als Kabelschirm dienenden Aluminium-Bandes 4; die Kabelader 2 ist ergänzend durch eine hier nicht gezeigte Kabelgarnitur verbunden bzw. angeschlossen. Eine Montagerichtung M verläuft vom Kabelende weg in Fig. 1 nach rechts.

Die Kabelschirmverbindung 6 wird im Wesentlichen durch eine Kontaktiervorrichtung 8 gebildet, die radial außerhalb der Kabelader 2 ausgebildet ist, vorzugsweise ringförmig als sich in axialer Richtung erstreckende Anordnung, und ein erstes Kontaktelement 9, ein zweites Kontaktelement 10 und Verbindungsmittel 11, 12, 13, hier Schrauben 11, ggf. mit Muttern 12 und z. B. Unterlegscheiben 13, aufweist. Das erste Kontaktelement 9 weist einen Verbindungsbereich 9a, z. B. mit als Gewindebohrungen ausgebildeten ersten Schraubenlöchern 14 zur Aufnahme der Schrauben 11, und einen Kontaktbereich 9b mit einer konischen Außenfläche 16 auf, wobei die konische Außenfläche 16 sich in Montagerichtung M, d.h. vom Kabelende weg, konisch verjüngt. Die ersten Schraubenlöcher 14 sind hier als Sackbohrungen mit Innengewinde ausgebildet. Auf der konischen Außenfläche 16 ist eine Strukturierung 17, z. B. als Aufrauhung, oder durch Zahnung oder Riffelung, ausgebildet, um die effektive Oberfläche und die Rauigkeit zu erhöhen. Das zweite Kontaktelement 10 weist zweite Schraubenlöcher 20, hier als Durchgangslöcher ohne Gewinde, und eine konische Innenfläche 22 auf, die vorteilhafterweise ebenfalls mit einer Strukturierung 23 zur Erhöhung ihrer Rauigkeit und effektiven Oberfläche ausgebildet ist.

Das Aluminium-Band 4 ist innerhalb des Hochspannungskabels 1 vorteilhafterweise als geschlossene Aluminiumfolie ausgebildet, die die Kabelader 2 rohrförmig umschließt. Im Bereich der Kabelschirmverbindung 6 ist das Aluminium-Band 4 in Endbereiche unterteilt, hier als sich in Richtung der Achse A erstreckende Metallstreifen 4a, die beim Austritt aus der äußeren Isolation 5 etwas radial nach außen aufgebogen sind und zwischen der konischen Außenfläche 16 des ersten Kontaktelementes 9 und der konischen Innenfläche 22 des zweiten Kontaktelementes 10 aufgenommen sind. Die Schrauben 11 dienen als Spannmittel, die das als Spannring dienende äußere, zweite Kontaktelement 10 auf und gegen das erste Kontaktelement 9 spannen, wobei die Strukturierungen 17, 23 hierbei eine eventuell auf den Metallstreifen 4a ausgebildete Aluminiumoxidschicht, die die elektrische Kontaktierung verschlechtern oder behindern kann, durchdringen.

Eine Aufnahmeöffnung 19 der Kontaktiervorrichtung 8 zur Aufnahme des Hochspannungskabels 1 ist somit in Fig. 1 in rechten Bereich der Kontaktiervorrichtung 8 vorgesehen: das Hochspannungskabel 1 wird von rechts in die Aufnahmeöffnung 19, die durch das zweite Kontaktelement 10 definiert ist, eingeführt, da die Montagerichtung M für die Kontaktiervorrichtung 8 nach rechts weist.

Zur Ausbildung der Kabelschirmverbindung 6 wird somit zunächst die äußere Isolation 5 gekürzt bzw. in einem Endbereich entfernt, und das Aluminium-Band 4 in die Metallstreifen 4a unterteilt. Das zweite Kontaktelement 10 wird vor oder nach dieser Strukturierung des Endbereichs mit seiner Aufnahmeöffnung 19 in Montagerichtung M auf das Hochspannungskabel 1 aufgeschoben. Das erste Kontaktelement 9 wird dann in Montagerichtung M aufgeschoben und die Metallstreifen 4a auf die konische Außenfläche 16 aufgelegt. Dann wird das zweite Kontaktelement 10 gegen die Montagerichtung M auf die Metallstreifen 4a aufgeschoben und die Anordnung mittels der Schrauben 11 verspannt.

Die beiden Kontaktelemente 9 und 10 und die Schrauben 11 sind somit elektrisch an das als Erdung dienende Aluminium-Band 4 angeschlossen. Hierbei kann das erste Kontaktelement 9 auch Teil eines Gehäuses der weiteren elektrischen Einrichtung 7 sein.

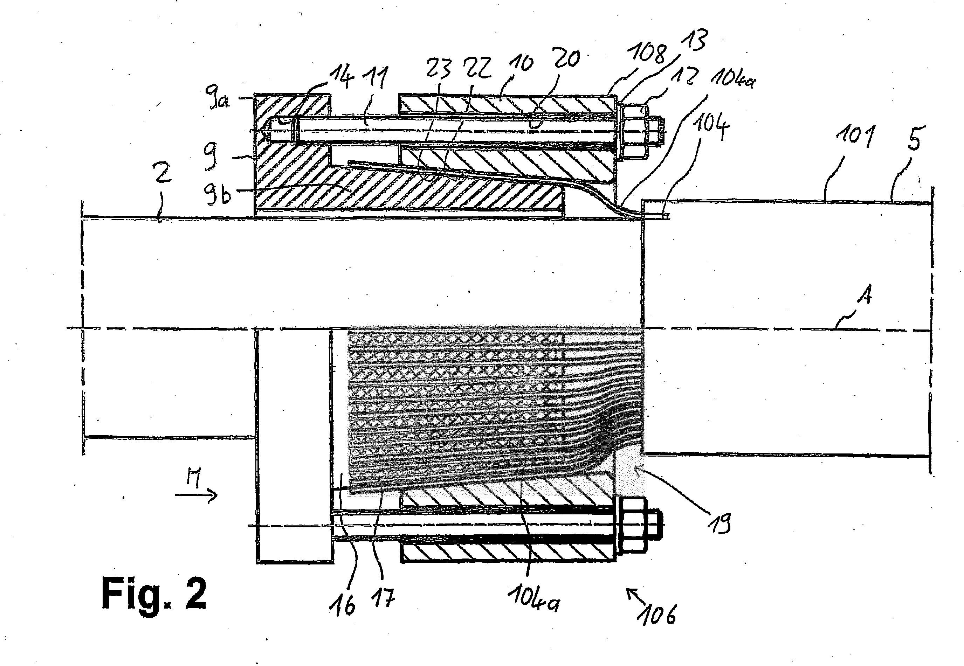

Fig. 2 zeigt eine weitere Ausführungsform, die nicht nicht erfindungsgemäß ist und lediglich der Veranschaulichung dient, die für ein Hochspannungskabel 101 vorgesehen ist, das bei ansonsten entsprechendem Aufbau wie der Ausführungsform der Fig. 1 als Kabelschirm einen Drahtschirm 104 aus Einzeldrähten 104a aufweist. Die Einzeldrähte 104a werden - entsprechend den Metallstreifen 4a der Ausführungsform der Fig. 1 - als Endbereiche radial etwas aufgebogen und zwischen der konischen Außenfläche 16 des ersten Kontaktelementes 9 und der konischen Innenfläche 22 des zweiten Kontaktelementes 10 verspannt; es kann somit für das Hochspannungskabel 101 die gleiche Kontaktiervorrichtung 8 wie bei der Ausführungsform der Fig. 1 verwendet werden.

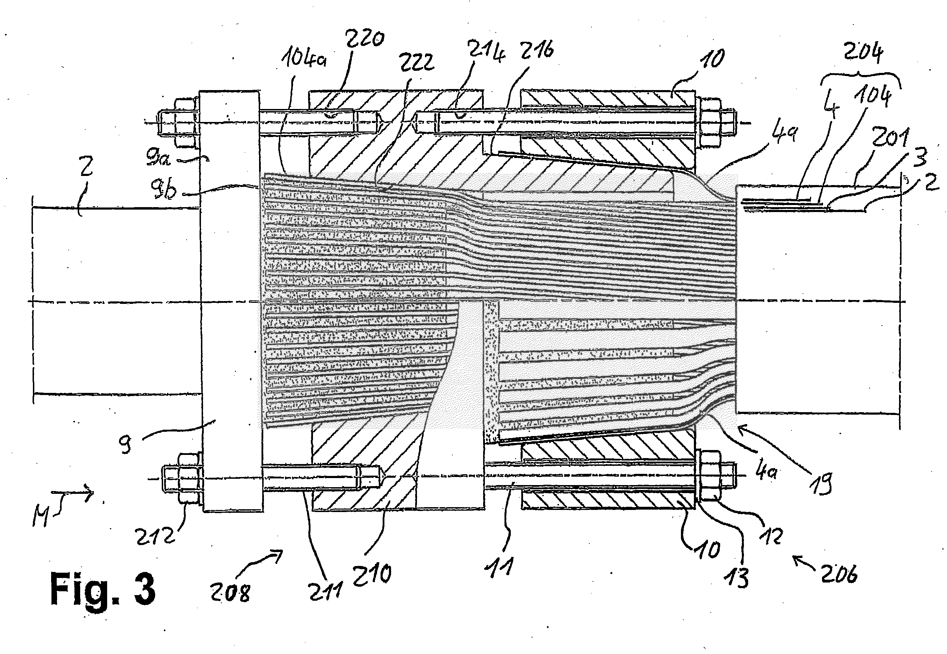

Fig. 3 zeigt die Ausführungsform gemäß der Erfindung , die zur Verbindung eines Hochspannungskabels 201 dient, das - bei ansonsten entsprechendem Aufbau gemäß Fig. 1 und 2 - einen Kabelschirm 204 aufweist, der sowohl ein Aluminium-Band (Metallband) 4 als auch einen Drahtschirm 104 mit Einzeldrähten 104a aufweist, wobei der Drahtschirm 104 und das Aluminium-Band 4 im Allgemeinen elektrisch miteinander kontaktiert sind. Bei der Ausführungsform der Fig. 3 ist eine Kontaktiervorrichtung 208 vorgesehen, die ein erstes Kontaktelement 9, ein zweites Kontaktelement 10 sowie zusätzlich ein drittes Kontaktelement 210 aufweist, dass sowohl eine konische Innenfläche 222 als auch konische Außenfläche 216 und weiterhin erste Schraubenlöcher 214 und zweite Schraubenlöcher 220, z. B. jeweils als Sackbohrungen mit Innengewinde, aufweist. Das zweite Kontaktelement 10 ist vorzugsweise entsprechend der Ausführungsform von Fig. 1 und 2 ausgebildet; das erste Kontaktelement 9 kann grundsätzlich ebenfalls entsprechend Fig. 1 und 2 ausgebildet sein, wobei es hier aber mit Durchgangslöchern zur Aufnahme von zweiten Schrauben 211 ausgebildet ist, die in die zweiten Schraubenlöcher 220 des dritten Kontaktelementes 210 eingeschraubt werden.

Somit wird das dritte Kontaktelement 210 über die ersten Schrauben 11 entsprechend der ersten und zweiten Ausführungsform mit dem zweiten Kontaktelement 10 verbunden und verspannt und weiterhin über die zweiten Schrauben 211 und Muttern 212 mit dem ersten Kontaktelement 9 verbunden und verspannt. Somit können die Metallstreifen 4a entsprechend der Ausführungsform der Fig. 1 zwischen der konischen Innenfläche 22 des zweiten Kontaktelementes 10 und der konischen Außenfläche 216 des dritten Kontaktelementes 210, und die Einzeldrähte 104a zwischen der konischen Außenfläche 16 des ersten Kontaktelementes 9 und der konischen Innenfläche 222 des dritten Kontaktelementes 210 aufgenommen werden, die vorteilhafterweise jeweils wie oben beschrieben Strukturierungen aufweisen. Die Verspannungen über die ersten Schrauben 11 und die zweiten Schrauben 211 erfolgen somit unabhängig voneinander.

Somit wird eine Kabelschirmverbindung 206 geschaffen, bei der mehrere, in dem Hochspannungskabel 201 radial übereinander angeordnete Schichten des Kabelschirms 204 axial zueinander versetzt kontaktiert werden.

Bei sämtlichen Ausführungsformen kann das jeweilige Hochspannungskabel 1, 101, 201 jeweils an ein weiteres, entsprechendes Hochspannungskabel angeschlossen werden, indem sich eine Ausbildung entsprechend Fig. 1, 2 oder 3 - vorzugsweise spiegelverkehrt - nach links anschließt.

## Patentansprüche

1. Kontaktiervorrichtung (8,208) zum Kontaktieren eines Kabelschirms (4,104,204) eines Kabels, insbesondere eines Hochspannungskabels (1,101,201), die mindestens folgende Merkmale aufweist:
- ein erstes Kontaktelement (9) mit einer konischen Außenfläche (16), ein zweites Kontaktelement (10) mit einer konischen Innenfläche (22) und Spannmittel (11,12,14,211,212,214,220) zum Verspannen der Kontaktelemente (9,10),
- eine Aufnahmeöffnung (19) zur Aufnahme des Kabels (1,101,201) entgegen einer Montagerichtung (M), wobei die Aufnahmeöffnung (19) durch das zweite Kontaktelement (10) definiert ist,
- mindestens ein Endbereich (4a,104a) des Kabelschirms (4,104,204), der zwischen der konischen Außenfläche (16) des ersten Kontaktelements (9) und der konischen Innenfläche (22) des zweiten Kontaktelements (10) verklemmbar und kontaktierbar ist, wobei die konische Außenfläche (16) und die konische Innenfläche (22) sich in Montagerichtung (M) verjüngen und wobei auf die Außenfläche (16) des ersten Kontaktelements (9) Metallstreifen (4a) eines als Kabelschirm dienenden Metallbandes (4) auflegbar sind und das zweite Kontaktelement (10) gegen die Montagerichtung (M) auf die Metallstreifen (4a) aufschiebbar ist,
- ein drittes Kontaktelement (210) zum Zwischensetzen zwischen das erste Kontaktelement (9) und das zweite Kontaktelement (10), wobei das dritte Kontaktelement (210) eine zweite konische Außenfläche (216) und eine zweite konische Innenfläche (222) aufweist und erste Endbereiche (104a) des Kabelschirms (4,104) zwischen der zweiten konischen Außenfläche (216) des dritten Kontaktelementes (210) und der konischen Innenfläche (22) des zweiten Kontaktelementes (10) verklemmbar sind und zweite Endbereiche (4a) des Kabelschirms (4,104) zwischen der zweiten konischen Innenfläche (222) des dritten Kotaktelementes (210) und der konischen Außenfläche (22) des ersten Kontaktelementes (9) verklemmbar sind, **dadurch gekennzeichnet,**
- **dass** das dritte Kontaktelement (210) mit dem zweiten Kontaktelement (10) durch erste Spannmittel (11) verspannbar ist und mit dem ersten Kontaktelement (9) unabhängig von dem zweiten Kontaktelement (10) durch zweite Spannmittel (211) verspannbar ist.

2. Kontaktiervorrichtung (8,208) nach Anspruch 1, **dadurch gekennzeichnet, dass** die Innenfläche (22) und/oder die Außenfläche (16) Strukturierungen (17,23) zur Erhöhung einer Rauigkeit der Oberflächen und/oder zum Durchdringen einer Oxidschicht der Endbereiche (4a) des Kabelschirms (4,104,204) aufweisen.

3. Kontaktiervorrichtung (8,208) nach Anspruch 1 oder 2, **dadurch gekennzeichnet, dass** die Spannmittel (11,12,14,211,212,214,220) mindestens zwei sich in einer Axialrichtung (A) erstreckende Schrauben (11,211) aufweisen, die in Schraubenlöchern (14,20) des ersten Kontaktelementes (9) und des zweiten Kontaktelementes (10) aufgenommen sind.

4. Kontaktiervorrichtung (8,208) nach Anspruch 3, **dadurch gekennzeichnet, dass** das erste Kontaktelemente (9) einen gegenüber der konischen Außenfläche (16) in einer radialen Richtung verbreiterten Verbindungsbereich (9a) mit ersten Schraubenlöchern (14) aufweist.

5. Kontaktiervorrichtung (8,208) nach Anspruch 3, **dadurch gekennzeichnet, dass** in einem der beiden Kontaktelemente (10) die Schraubenlöcher als Durchgangslöcher (20) und in dem anderen Kontaktelement (9) die Schraubenlöcher (14) als Sackbohrung mit Innengewinde zur Aufnahme der Schrauben (11) ausgebildet sind.

6. Kontaktiervorrichtung (8) nach Anspruch 1, **dadurch gekennzeichnet, dass** das dritte Kontaktelement (210) dritte Schraubenlöcher (220) zur Aufnahme von zweiten Schrauben (211) zum Verspannen mit dem ersten Kontaktelement (9) und vierte Schraubenlöcher (214) zur Aufnahme von ersten Schrauben (11) zum Verspannen mit dem zweiten Kontaktelement (10) aufweist.

7. Kabelschirmverbindung (6,106,206), die ein Kabel (1,101,201), insbesondere ein Hochspannungskabel, und eine Kontaktiervorrichtung (8,208) nach einem der vorherigen Ansprüche aufweist, wobei das Kabel (1,101,201) mindestens eine innere Kabelader (2) und einen äußeren Kabelschirm (4,104,204) aufweist und die Kontaktiervorrichtung (8,208) den Kabelschirm (4,104,204) aufnimmt, zur Kontaktierung des Kabelschirms (4,104,204) mit einer weiteren elektrischen Einrichtung (7), wobei die konische Innenfläche (22) und die konische Außenfläche (16) sich zum Kabelende hin konisch aufweiten.

8. Kabelschirmverbindung (206) nach Anspruch 7 mit einer Kontaktiervorrichtung (8,208) nach einem der Ansprüche 1 bis 5, wobei das Kabel (201) einen Drahtschirm (4) und einen Metallband-Schirm (104) aufweist, die voneinander in axialer Richtung getrennt zwischen dem ersten Kontaktelement (9) und dem dritten Kontaktelement (210) sowie zwischen dem zweiten Kontaktelement (10) und dem dritten Kontaktelement (210) verklemmt und kontaktiert sind.

## Claims

1. A contacting device (8, 208) for contacting a cable screen (4, 104, 204) of a cable, in particular, a high voltage cable (1, 101, 201), which has at least the following features:
- a first contact element (9) with a conical outer surface (16), a second contact element (10) with a conical inner surface (22) and clamping means (11, 12, 14, 211, 212, 214, 220) for clamping the contact elements (9, 10),
- a receiving opening (19) for receiving the cable (1, 101, 201) counter to a mounting direction (M), wherein the receiving opening (19) is defined by the second contact element (10),
- at least one end region (4a, 104a) of the cable screen (4, 104, 204), which can be clamped and can be contacted between the conical outer surface (16) of the first contact element (9) and the conical inner surface (22) of the second contact element (10), wherein the conical outer surface (16) and the conical inner surface (22) taper in the mounting direction (M) and wherein metal strips (4a) of a metal band (4) serving as a cable screen can be placed on the outer surface (16) of the first contact element (9) and the second contact element (10) can be slid counter to the mounting direction (M) onto the metal strips (4a),
- a third contact element (210) for interposing between the first contact element (9) and the second contact element (10), wherein the third contact element (210) has a second conical outer surface (216) and a second conical inner surface (222) and first end regions (104a) of the cable screen(4, 104) can be clamped between the second conical outer surface (216) of the third contact element (210) and the conical inner surface (22) of the second contact element (10) and second end regions (4a) of the cable screen (4, 104) can be clamped between the second conical inner surface (222) of the third contact element (210) and the conical outer surface (22) of the first contact element (9), **characterized in**
- **that** the third contact element (210) can be clamped with the second contact element (10) by first clamping means (11) and can be clamped with the first contact element (9) independently of the second contact element (10) by second clamping means (211).

2. The contacting device (8, 208) according to claim 1, **characterized in that** the inner surface (22) and/or the outer surface (16) have structures (17, 23) for increasing a roughness of the surfaces and/or for penetrating the oxide layer of the end regions (4a) of the cable screen (4, 104, 204).

3. The contacting device (8, 208) according to claim 1 or 2, **characterized in that** the clamping means (11, 12, 14, 211, 212, 214, 220) have at least two screws extending in an axial direction (A), which are received in screw holes (14, 20) of the first contact element (9) and of the second contact element (10).

4. The contacting device (8, 208) according to claim 3, **characterized in that** the first contact element (9) has a connection region (9a) that is widened in relation to the conical outer surface (16) in a radial direction, which connection region has first screw holes (14).

5. The contacting device (8, 208) according to claim 3, **characterized in that** in one of the two contact elements (10), the screw holes are designed as through-holes (20) and in the other contact element (9) the screw holes (14) are designed as blind holes with internal threads for receiving the screws (11).

6. The contacting device (8) according to claim 1, **characterized in that** the third contact element (210) has third screw holes (220) for receiving second screws (211) for clamping with the first contact element (9) and fourth screw holes (214) for receiving first screws (11) for clamping with the second contact element (10).

7. A cable screen connection (6, 106, 206), which in particular has a high voltage cable, and a contacting device (8, 208) according to any one of the preceding claims, wherein the cable (1, 101, 201) has at least one inner cable core (2) and an outer cable screen (4, 104, 204) and the contacting device (8, 208) receives the cable screen (4, 104, 204), for contacting the cable screen (4, 104, 204) with a further electrical device (7), wherein the conical inner surface (22) and the conical outer surface (16) widen conically towards the cable end.

8. The cable screen connection (206) according to claim 7 having a contacting device (8, 208) according to any one of claims 1 to 5, wherein the cable (201) has a wire screen (4) and a metal band screen (104), which, separated from one another in the axial direction, are clamped and contacted between the first contact element (9) and the third contact element (210) and between the second contact element (10) and the third contact element (210).

## Revendications

1. Dispositif de contact (8, 208), pour l'établissement du contact électrique d'un blindage de câble (4, 104, 204) d'un câble, plus particulièrement d'un câble à haute tension (1, 101, 201), qui présente les caractéristiques suivantes :
- un premier élément de contact (9) avec une surface externe conique (16), un deuxième élément de contact (10) avec une surface interne conique (22) et des moyens de serrage (11, 12, 14, 211, 212, 214, 220) pour le serrage des éléments de contact (9, 10),
- une ouverture de logement (19) pour le logement du câble (1, 101, 201) à l'encontre d'un sens de montage (M), dans lequel l'ouverture de logement (19) est définie par le deuxième élément de contact (10),
- au moins une partie d'extrémité (4a, 104a) du blindage de câble (4, 104, 204), qui peut être coincée et mise en contact entre la surface externe conique (16) du premier élément de contact (9) et la surface interne conique (22) du deuxième élément de contact (10), dans lequel la surface externe conique (16) et la surface interne conique (22) se rétrécissent dans le sens de montage (M) et dans lequel, sur la surface externe (16) du premier élément de contact (9), peuvent être posées des bandes métalliques (4a) d'un ruban métallique (4) servant de blindage de câble et le deuxième élément de contact (10) peut être coulissé à l'encontre du sens de montage (M) sur les bandes métalliques (4a),
- un troisième élément de contact (210) destiné à être intercalé entre le premier élément de contact (9) et le deuxième élément de contact (10), dans lequel le troisième élément de contact (210) présente une deuxième surface externe conique (216) et une deuxième surface interne conique (222) et les premières parties d'extrémité (104a) du blindage de câble (4, 104) peuvent être coincées entre la deuxième surface externe conique (216) du troisième élément de contact (210) et la surface interne conique (22) du deuxième élément de contact (10) et des deuxièmes parties d'extrémité (4a) du blindage de câble (4, 104) peuvent être coincées entre la deuxième surface interne conique (222) du troisième élément de contact (210) et la surface externe conique (22) du premier élément de contact (9), **caractérisé en ce que**
- le troisième élément de contact (210) peut être serré avec le deuxième élément de contact (10) à l'aide de premiers moyens de serrage (11) et avec le premier élément de contact (9), indépendamment du deuxième élément de contact (10), à l'aide de deuxièmes moyens de serrage (211).

2. Dispositif de contact (8, 208) selon la revendication 1, **caractérisé en ce que** la surface interne (22) et/ou la surface externe (16) présentent des textures (17, 23) permettant d'augmenter une rugosité des surfaces et/ou de traverser une couche d'oxyde des parties d'extrémité (4a) du blindage de câble (4, 104, 204).

3. Dispositif de contact (8, 208) selon la revendication 1 ou 2, **caractérisé en ce que** les moyens de serrage (11, 12, 14, 211, 212, 214, 220) comprennent au moins deux vis (11, 211) s'étendant dans une direction axiale (A), qui sont logées dans des trous de vis (14, 20) du premier élément de contact (9) et du deuxième élément de contact (10).

4. Dispositif de contact (8, 208) selon la revendication 3, **caractérisé en ce que** le premier élément de contact (9) comprend une partie de liaison (9a) élargie dans une direction radiale par rapport à la surface externe conique (16), avec des premiers trous de vis (14).

5. Dispositif de contact (8, 208) selon la revendication 3, **caractérisé en ce que**, dans un des deux éléments de contact (10), les trous de vis sont conçus comme des trous traversants (20) et, dans l'autre élément de contact (9), les trous de vis (14) sont conçus comme des trous borgnes avec un filetage interne pour le logement des vis (11).

6. Dispositif de contact (8) selon la revendication 1, **caractérisé en ce que** le troisième élément de contact (210) comprend des troisièmes trous de vis (220) pour le logement de deuxièmes vis (211) pour le serrage avec le premier élément de contact (9) et des quatrièmes trous de vis (214) pour le logement de premières vis (11) pour le serrage avec le deuxième élément de contact (10).

7. Connexion de blindage de câble (6, 106, 206) qui comprend un câble (1, 101, 201), plus particulièrement un câble à haute tension, et un dispositif de contact (8, 208) selon l'une des revendications précédentes, dans laquelle le câble (1, 101, 201) comprend au moins un fil de câble interne (2) et un blindage de câble externe (4, 104, 204) et le dispositif de contact (8, 208) loge le blindage de câble (4, 104, 204), pour l'établissement du contact du blindage de câble (4, 104, 204) avec un autre dispositif électrique (7), dans laquelle la surface interne conique (22) et la surface externe conique (16) s'élargissent de manière conique en direction de l'extrémité du câble.

8. Connexion de blindage de câble (206) selon la revendication 7, avec un dispositif de contact (8, 208) selon l'une des revendications 1 à 5, dans laquelle le câble (201) comprend un blindage de fil (4) et un blindage à bande métallique (104), qui sont coincés et mis en contact de manière séparée entre eux dans la direction axiale entre le premier élément de contact (9) et le troisième élément de contact (210) ainsi qu'entre le deuxième élément de contact (10) et le troisième élément de contact (210).
